# EUROPEAN PATENT APPLICATION

(11) **EP 4 296 301 A1**
(43) Date of publication of application: **27.12.2023**
(21) Application number: 21926765.5
(22) Date of filing: 09.12.2021
(51) Int. Cl.: C08J 11/06

(54) **THERMAL DECOMPOSITION EXTRUDER, THERMAL DECOMPOSITION SYSTEM, MANUFACTURING METHOD AND DISCHARGE METHOD FOR DECOMPOSITION GAS**

(30) Priority: 19.02.2021 JP 2021025439
(71) Applicant: The Japan Steel Works, Ltd., Tokyo 141-0032 (JP)
(72) Inventor: FUKUDA, Yuji, Tokyo 141-0032 (JP); INAGAWA, Kenji, Tokyo 141-0032 (JP); KIMURA, Yoshitaka, Tokyo 141-0032 (JP)
(74) Representative: Lahrtz, Fritz
(86) International application number: PCT/JP2021/045362
(87) International publication number: WO 2022/176340

(57) **Abstract**

In a thermal decomposition extruder, the top edge of a hopper is closed, and a sidewall of the hopper is provided with a discharge hole for discharging a decomposition gas, produced when polymers thermally decompose, outside the hopper.

## Description

### TECHNICAL FIELD

The present disclosure relates to a thermal decomposition extruder, a thermal decomposition system, a method of manufacturing decomposition gas, and a method of emitting decomposition gas.

### BACKGROUND ART

Japanese Patent Laying-Open No. 11-106427 (PTL 1) describes an extruder. In the extruder described in PTL 1, acrylic injected into a cylinder from a hopper is plasticized and thermally decomposed in the cylinder by shear force from twin screws and heat from a heater.

### CITATION LIST

### PATENT LITERATURE

PTL 1: Japanese Patent Laying-Open No. 11-106427

### SUMMARY OF INVENTION

### TECHNICAL PROBLEM

Decomposition gas resulting from thermal decomposition of the acrylic may flow back and emitted from the hopper into the atmosphere.

The present disclosure provides a thermal decomposition extruder capable of suppressing emission of decomposition gas resulting from thermal decomposition of a polymer from a hopper.

### SOLUTION TO PROBLEM

In a thermal decomposition extruder according to one aspect of the present disclosure, a hopper has an upper end closed, and a sidewall of the hopper is provided with an emission hole for emission to the outside of the hopper, of decomposition gas produced during thermal decomposition of a polymer.

### ADVANTAGEOUS EFFECTS OF INVENTION

According to the thermal decomposition extruder according to one aspect of the present disclosure, emission from the hopper, of decomposition gas resulting from thermal decomposition of a polymer can be suppressed.

### BRIEF DESCRIPTION OF DRAWINGS

Fig. 1 is a schematic diagram of a thermal decomposition system according to a first embodiment.
Fig. 2 is a schematic cross-sectional view of an extruder 100 included in the thermal decomposition system according to the first embodiment.
Fig. 3 shows a first exemplary construction of a screw 30.
Fig. 4 shows a second exemplary construction of screw 30.
Fig. 5 shows a third exemplary construction of screw 30.
Fig. 6 is a cross-sectional view of a hopper 14 included in extruder 100 of the thermal decomposition system according to the first embodiment.
Fig. 7 is a flowchart showing a method of manufacturing decomposition gas with the use of the thermal decomposition system according to the first embodiment.
Fig. 8 is a schematic cross-sectional view of an extruder 200.
Fig. 9 is a cross-sectional view of hopper 14 included in extruder 200.
Fig. 10 is a schematic diagram of a thermal decomposition system according to a second embodiment.
Fig. 11 is a cross-sectional view of hopper 14 included in extruder 100 of the thermal decomposition system according to the second embodiment.
Fig. 12 is a schematic diagram of a thermal decomposition system according to a third embodiment.
Fig. 13 is a cross-sectional view of hopper 14 included in extruder 100 of the thermal decomposition system according to the third embodiment.
Fig. 14 is a schematic diagram of a thermal decomposition system according to a fourth embodiment.
Fig. 15 is a cross-sectional view of hopper 14 included in extruder 100 of the thermal decomposition system according to the fourth embodiment.
Fig. 16 is a schematic diagram of a thermal decomposition system according to a fifth embodiment.
Fig. 17 is a cross-sectional view of a cylinder 10 included in extruder 100 of the thermal decomposition system according to the fifth embodiment.
Fig. 18 is a cross-sectional view of hopper 14 included in extruder 100 of the thermal decomposition system according to the fifth embodiment.

### DESCRIPTION OF EMBODIMENTS

An embodiment of the present disclosure will be described with reference to the drawings. The same or corresponding elements in the drawings below have the same reference characters allotted and redundant description will not be repeated.

### (Thermal Decomposition System According to First Embodiment)

A construction of a thermal decomposition system according to a first embodiment will be described.

### <Schematic Construction of Thermal Decomposition System According to First Embodiment>

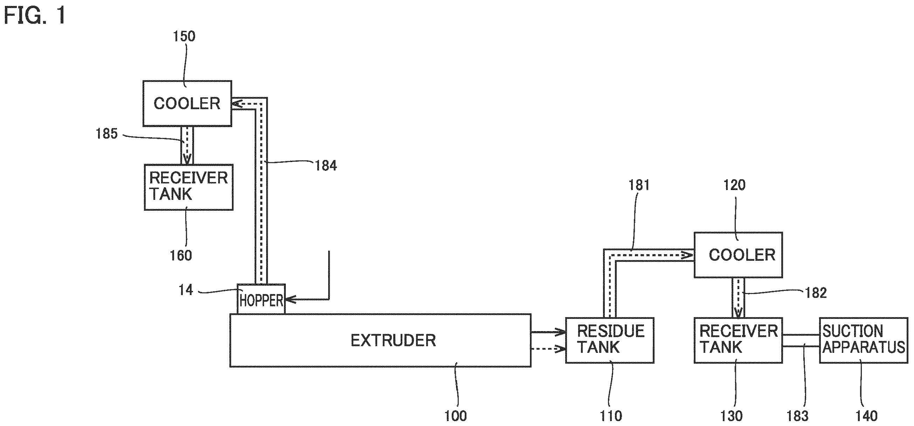

Fig. 1 is a schematic diagram of the thermal decomposition system according to the first embodiment. As shown in Fig. 1, the thermal decomposition system according to the first embodiment includes an extruder 100, a residue tank 110, a cooler 120, a receiver tank 130, and a suction apparatus 140.

The thermal decomposition system according to the first embodiment further includes a cooler 150 and a receiver tank 160. The thermal decomposition system according to the first embodiment further includes a conduit 181, a conduit 182, a conduit 183, a conduit 184, and a conduit 185. An arrow shown by a solid line in Fig. 1 shows a flow of a polymer and an arrow shown by a dotted line in Fig. 1 shows a flow of decomposition gas or a liquid monomer.

Residue tank 110 is connected to extruder 100. Cooler 120 is connected to residue tank 110 through conduit 181. Receiver tank 130 is connected to cooler 120 through conduit 182 and connected to suction apparatus 140 through conduit 183.

Cooler 150 is connected to a hopper 14 of extruder 100 through conduit 184. Receiver tank 160 is connected to cooler 150 through conduit 185.

### <Detailed Construction of Extruder 100>

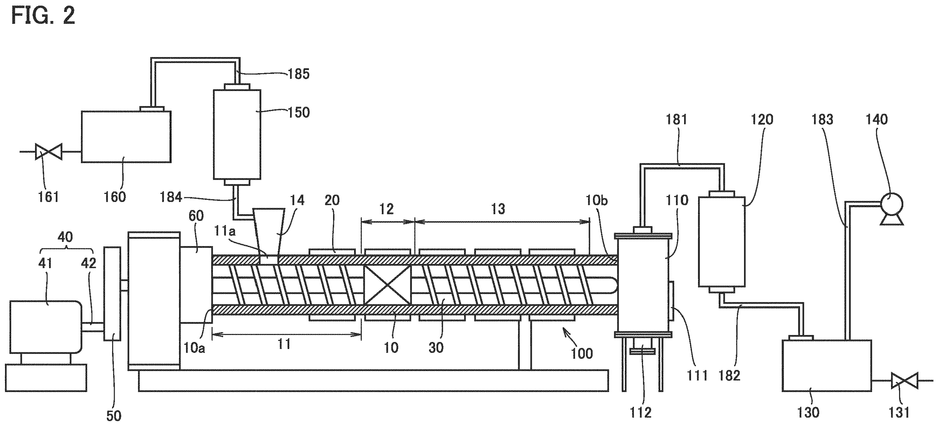

Fig. 2 is a schematic cross-sectional view of extruder 100 included in the thermal decomposition system according to the first embodiment. As shown in Fig. 2, extruder 100 includes a cylinder 10, a heater 20, a screw 30, a motor 40, and a gearbox 50. Extruder 100 may further include a shaft sealing mechanism 60. Extruder 100 is an extruder for thermal decomposition of a polymer.

Cylinder 10 includes an upstream end 10a and a downstream end 10b. Downstream end 10b is an end opposite to upstream end 10a. Downstream end 10b is connected to residue tank 110.

Heater 20 is arranged on an outer circumferential surface of cylinder 10. Heater 20 is, for example, a cast-in heater, a cartridge heater, or the like. Heater 20 heats a polymer located in cylinder 10. Heater 20, however, is not limited to an electric heater such as the cast-in heater or the cartridge heater. The polymer in cylinder 10 may be heated by steam or oil. In this case, steam or oil heats the polymer in cylinder 10 as it passes through a jacket provided in cylinder 10.

Screw 30 is arranged in cylinder 10. Screw 30 is, for example, twin screws. Screw 30 applies shear force to the polymer in cylinder 10 while it carries the polymer located in cylinder 10 from a side of upstream end 10a toward downstream end 10b.

Cylinder 10 includes a carrier portion 11, a plasticization portion 12, and a thermal decomposition portion 13. Plasticization portion 12 is located closer to downstream end 10b relative to carrier portion 11. Thermal decomposition portion 13 is located closer to downstream end 10b relative to plasticization portion 12.

Hopper 14 is attached to carrier portion 11. A polymer is injected into carrier portion 11 through hopper 14. The polymer injected into carrier portion 11 is carried to plasticization portion 12 as screw 30 rotates. Examples of the polymer include a polymethyl methacrylate resin, a poly-lactic acid resin, a polyethylene terephthalate resin, a polystyrene resin, a polyamide resin, and a polypropylene resin. The polymer, however, is not limited thereto. The polymer should only thermally be decomposed into decomposition gas.

The polymer located in plasticization portion 12 is plasticized by heat from heater 20 and shear force from screw 30. The polymer located in plasticization portion 12 is carried to thermal decomposition portion 13 as screw 30 rotates. The polymer located in thermal decomposition portion 13 is thermally decomposed by heat from heater 20 and shear force from screw 30. The thermally decomposed polymer is converted to decomposition gas.

Motor 40 includes a motor main body 41 and a shaft 42. Motor main body 41 rotates shaft 42 around a shaft core. Gearbox 50 is connected to screw 30 and shaft 42. Gearbox 50 transmits rotation of shaft 42 to screw 30. Motor 40 thus drives screw 30.

Shaft sealing mechanism 60 hermetically seals upstream end 10a while screw 30 is ready to operate. For example, a mechanical seal is employed as shaft sealing mechanism 60.

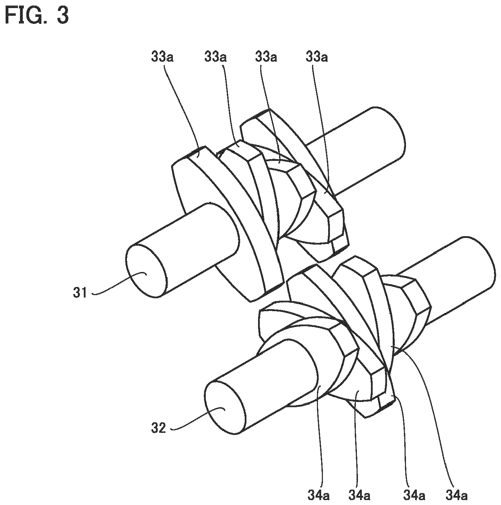

Fig. 3 shows a first exemplary construction of screw 30. As shown in Fig. 3, screw 30 includes a shaft 31 and a shaft 32 and a plurality of kneading discs 33a and a plurality of kneading discs 34a.

Shaft 31 and shaft 32 extend in a direction identical to a direction of extension of cylinder 10. Shaft 31 and shaft 32 are rotated around the shaft core by gearbox 50. The plurality of kneading discs 33a are attached to shaft 31. The plurality of kneading discs 34a are attached to shaft 32.

Kneading disc 33a closest to upstream end 10a is 180° out of phase with kneading disc 33a closest to downstream end 10b. The phase of kneading disc 33a varies toward downstream end 10b from the side of upstream end 10a. Variation in phase between two kneading discs 33a adjacent in the direction of extension of shaft 31 is equal to a value calculated by dividing 180° by a result of subtraction of one from the number of kneading discs 33a. Since there are five kneading discs 33a in the example in Fig. 3, two adjacent kneading discs 33a are 45° out of phase with each other.

Kneading disc 33a and kneading disc 34a adjacent to each other are 90° out of phase with each other. A direction of variation in phase of kneading discs 33a from the side of upstream end 10a toward downstream end 10b is identical to a direction of variation in phase of kneading discs 34a. In the exemplary construction shown in Fig. 3, screw 30 sends a polymer in a direction from upstream end 10a toward downstream end 10b while it applies shear force to the polymer.

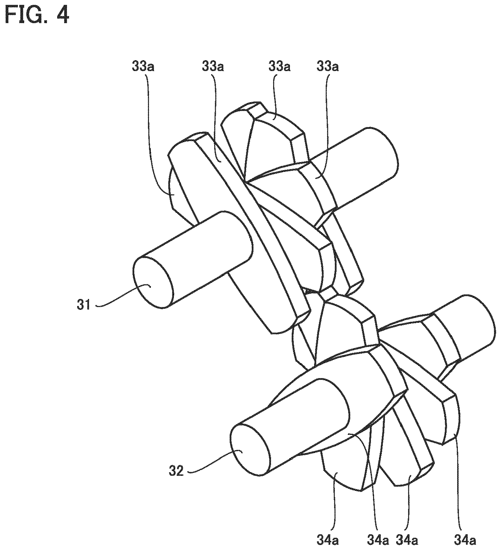

Fig. 4 shows a second exemplary construction of screw 30. As shown in Fig. 4, the direction of variation in phase of two kneading discs 33a adjacent in the direction of extension of shaft 31 and the direction of variation in phase of two kneading discs 34a adjacent in the direction of extension of shaft 32 are reverse to the directions of variation in phase shown in Fig. 3, respectively. The exemplary construction shown in Fig. 4 is otherwise common to the exemplary construction shown in Fig. 3. In the exemplary construction shown in Fig. 4, screw 30 sends the polymer back in a direction from downstream end 10b toward upstream end 10a while it applies shear force to the polymer.

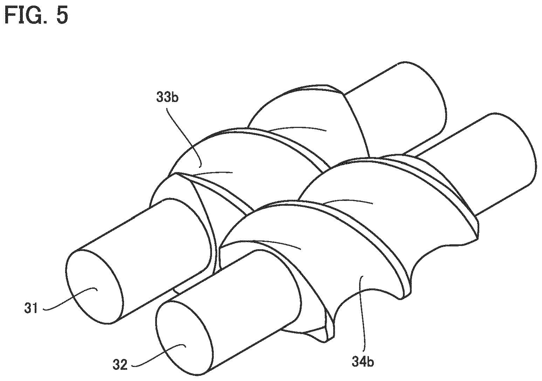

Fig. 5 shows a third exemplary construction of screw 30. As shown in Fig. 5, screw 30 may include a full flight screw 33b and a full flight screw 34b instead of the plurality of kneading discs 33a and the plurality of kneading discs 34a.

Full flight screw 34b and full flight screw 33b are common in structure to each other. Full flight screw 33b is 90° out of phase with full flight screw 34b. In the exemplary construction shown in Fig. 5, screw 30 plays a role to mainly send the polymer in the direction from upstream end 10a toward downstream end 10b.

For screw 30 located in plasticization portion 12, for example, the exemplary construction shown in Fig. 3 and the exemplary construction shown in Fig. 4 are used as being combined. Plasticization portion 12 is thus more readily filled with the polymer and shear force from screw 30 is more readily applied to the polymer located in plasticization portion 12. Consequently, plasticization of the polymer located in plasticization portion 12 more readily proceeds.

For screw 30 located in thermal decomposition portion 13, for example, the exemplary construction shown in Fig. 3, the exemplary construction shown in Fig. 4, and the exemplary construction shown in Fig. 5 are used as being combined. Thermal decomposition portion 13 is thus more readily filled with the polymer and shear force from screw 30 is more readily applied to the polymer located in thermal decomposition portion 13. Consequently, thermal decomposition of the polymer located in thermal decomposition portion 13 more readily proceeds.

For screw 30 located in carrier portion 11, on the other hand, the exemplary construction shown in Fig. 5 is used. The polymer is thus smoothly carried to plasticization portion 12.

In summary, screw 30 in plasticization portion 12 and thermal decomposition portion 13 is preferably in such a structure that plasticization portion 11 and thermal decomposition portion 13 are more readily filled with the polymer and shear force is more readily applied to the polymer. On the other hand, screw 30 in carrier portion 11 is preferably in such a structure that the polymer can smoothly be carried to plasticization portion 12.

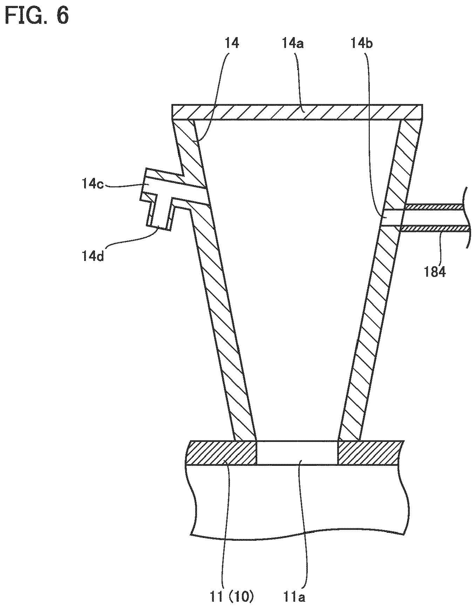

Fig. 6 is a cross-sectional view of hopper 14 included in extruder 100 of the thermal decomposition system according to the first embodiment. As shown in Fig. 6, hopper 14 is cylindrical. Hopper 14 has a lower end attached to carrier portion 11. An internal space in hopper 14 and an internal space in carrier portion 11 (cylinder 10) are thus connected to each other through a hopper hole 11a. Hopper 14 has an upper end closed by a lid member 14a.

An emission hole 14b is provided in a sidewall of hopper 14. Emission hole 14b passes through the sidewall of hopper 14. In other words, emission hole 14b is connected to the internal space in hopper 14. Conduit 184 is connected to emission hole 14b.

A chute 14c is provided in the sidewall of hopper 14. A polymer is injected into hopper 14 through chute 14c. The polymer injected through chute 14c is injected into carrier portion 11 through hopper hole 11a provided in carrier portion 11.

Chute 14c is provided with an introduction hole 14d. Inert gas is introduced into hopper 14 through introduction hole 14d. Inert gas is introduced into hopper 14 along an inner wall surface of the sidewall of hopper 14. Inert gas introduced into hopper 14 thus flows as swirling in hopper 14. For example, nitrogen gas is adopted as inert gas.

### <Operations of Thermal Decomposition System According to First Embodiment>

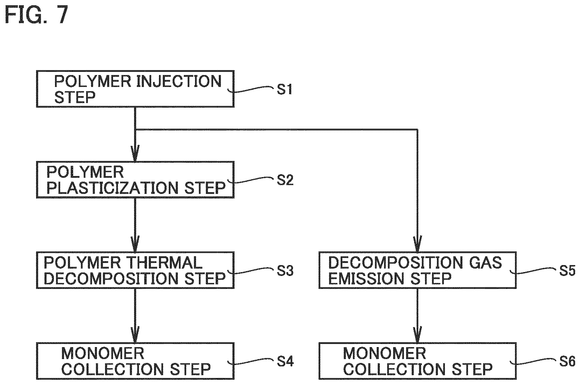

Fig. 7 is a flowchart showing a method of manufacturing decomposition gas with the use of the thermal decomposition system according to the first embodiment. As shown in Fig. 7, the method of manufacturing decomposition gas with the use of the thermal decomposition system according to the first embodiment includes a polymer injection step S1, a polymer plasticization step S2, a polymer thermal decomposition step S3, and a monomer collection step S4. Furthermore, the method of manufacturing decomposition gas with the use of the thermal decomposition system according to the first embodiment further includes a decomposition gas emission step S5 and a monomer collection step S6.

In polymer injection step S1, a polymer is injected in extruder 100. More specifically, the polymer is injected into carrier portion 11 through hopper 14 and hopper hole 11a. The polymer injected into carrier portion 11 is carried to plasticization portion 12 as screw 30 rotates. The polymer injected in carrier portion 11 is heated by heater 20 while it is carried to plasticization portion 12 by screw 30.

In polymer plasticization step S2, extruder 100 plasticizes the polymer. The polymer is plasticized in plasticization portion 12. More specifically, the polymer is plasticized by application of shear force by screw 30 and application of heat by heater 20 in plasticization portion 12.

In polymer thermal decomposition step S3, extruder 100 thermally decomposes at least some of the polymer plasticized in polymer plasticization step S2. The polymer is thermally decomposed in thermal decomposition portion 13. More specifically, the polymer is thermally decomposed by application of shear force by screw 30 and application of heat by heater 20 in decomposition portion 13. The thermally decomposed polymer is converted to decomposition gas. In polymer thermal decomposition step S3, the entire polymer does not have to thermally be decomposed.

In monomer collection step S4, a liquid monomer is collected. In monomer collection step S4, initially, decomposition gas produced in polymer thermal decomposition step S3 is collected. More specifically, as suction apparatus 140 (for example, a vacuum pump) is driven, a pressure in the inside of residue tank 110, the inside of cooler 120, and the inside of receiver tank 130 becomes negative relative to the pressure in cylinder 10. Consequently, decomposition gas is sent from downstream end 10b through residue tank 110 to cooler 120. Since the negative pressure is produced in cooler 120 by variation in volume at the time of condensation of decomposition gas in cooler 120, decomposition gas can be sent to cooler 120 without using suction apparatus 140.

Decomposition gas sent to cooler 120 is then cooled in cooler 120. Cooling is performed, for example, by water cooling. More specifically, decomposition gas sent to cooler 120 passes through a cooling pipe arranged in cooler 120. Since water flows around the cooling pipe, decomposition gas sent to cooler 120 is condensed by cooling to become a liquid (liquid monomer). The liquid monomer condensed in cooler 120 is stored in receiver tank 130 and collected.

The liquid monomer is taken out of receiver tank 130 through an outlet 131 (see Fig. 2) provided in an outer wall of receiver tank 130. The collected liquid monomer can be recycled as a polymer through a polymerization step.

While extruder 100 is operating, decomposition gas may be produced as a result of thermal decomposition of some of the polymer in plasticization portion 12. Decomposition gas may be produced as a result of thermal decomposition of some of the polymer in carrier portion 11, plasticization portion 12, and thermal decomposition portion 13 also while extruder 100 is at a standstill. Some of decomposition gas may flow back in cylinder 10 in the direction from downstream end 10b toward upstream end 10a. Decomposition gas that flows back may be referred to as backflow decomposition gas.

In decomposition gas emission step S5, backflow decomposition gas is emitted through emission hole 14b. More specifically, backflow decomposition gas that flows back to carrier portion 11 is suctioned into hopper 14 due to a cyclone phenomenon caused by swirl in hopper 14 of inert gas introduced through introduction hole 14d, and emitted through emission hole 14b.

In monomer collection step S6, firstly, backflow decomposition gas emitted through emission hole 14b is sent to cooler 150 through conduit 184. Secondly, backflow decomposition gas sent to cooler 150 is cooled in cooler 150. Cooling is performed, for example, by water cooling. More specifically, backflow decomposition gas sent to cooler 150 passes through a cooling pipe arranged in cooler 150. Since water flows around the cooling pipe, backflow decomposition gas sent to cooler 150 is condensed as it passes through the cooling pipe to become a liquid (liquid monomer). The liquid monomer condensed in cooler 150 is stored in receiver tank 160 through conduit 185.

Thirdly, the liquid monomer stored in receiver tank 160 is collected. The liquid monomer is taken out of receiver tank 160 through an outlet 161 (see Fig. 2) provided in an outer wall of receiver tank 160.

The polymer not thermally decomposed in polymer thermal decomposition step S3 and an impurity (a residue) contained in the polymer are discharged from downstream end 10b and stored in residue tank 110. A heater 111 (see Fig. 2) may be attached to an outer wall of residue tank 110. As heater 111 is activated, cooling of decomposition gas at an outdoor temperature and resultant condensation thereof in residue tank 110 is suppressed. The residue stored in residue tank 110 is taken out through an outlet 112 (see Fig. 2) provided in the outer wall of residue tank 110.

### (Effect of Thermal Decomposition System According to Embodiment)

An effect of the thermal decomposition system according to the embodiment will be described in comparison to a comparative example.

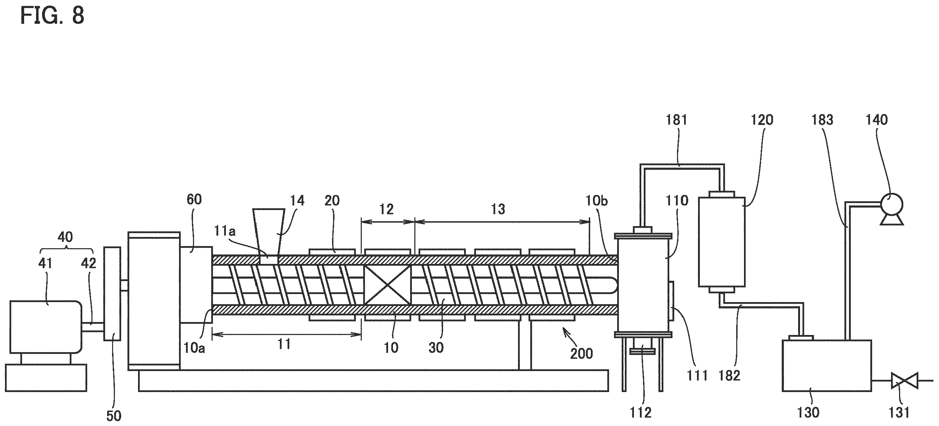

A thermal decomposition system according to the comparative example includes an extruder 200 instead of extruder 100. Fig. 8 is a schematic cross-sectional view of extruder 200. As shown in Fig. 8, the thermal decomposition system according to the comparative example does not include cooler 150 and receiver tank 160. In addition, the thermal decomposition system according to the comparative example does not include conduit 184 and conduit 185.

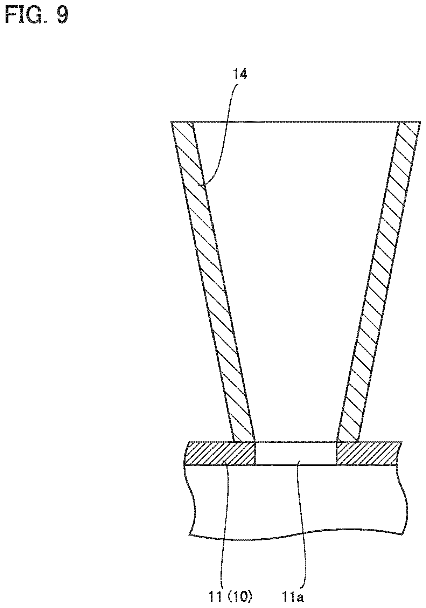

Fig. 9 is a cross-sectional view of hopper 14 included in extruder 200. As shown in Fig. 9, in extruder 200, hopper 14 does not have the upper end closed by lid member 14a. In addition, in extruder 200, emission hole 14b, chute 14c, and introduction hole 14d are not provided in the sidewall of hopper 14. Except for these aspects, the thermal decomposition system according to the comparative example is identical to the thermal decomposition system according to the first embodiment.

As described above, some of decomposition gas produced in cylinder 10 may become backflow decomposition gas. Since the upper end of hopper 14 is not closed in the thermal decomposition system according to the comparative example, backflow decomposition gas may be emitted from the upper end of hopper 14 to the outside of the system.

In the thermal decomposition system according to the first embodiment, on the other hand, emission hole 14b is provided in hopper 14 and the upper end of hopper 14 is closed. Since inert gas is supplied through introduction hole 14d in the thermal decomposition system according to the first embodiment, backflow decomposition gas does not flow into chute 14c. Therefore, backflow decomposition gas is emitted through emission hole 14b. Backflow decomposition gas emitted through emission hole 14b is condensed in cooler 150 and stored in receiver tank 160. Therefore, emission of backflow decomposition gas to the outside of the system is suppressed.

Depending on an operating condition of extruder 100, a temperature of backflow decomposition gas may be high (for example, at a temperature equal to or higher than a flash point or a spontaneous ignition point of backflow decomposition gas). For example, in an example where the polymethyl methacrylate resin is employed as the polymer, depending on the operating condition of extruder 100, the temperature of backflow decomposition gas may be equal to or higher than 400°C. Since backflow decomposition gas is cooled and then stored in the thermal decomposition system according to the embodiment, safety in treatment of backflow decomposition gas can be enhanced.

### (Thermal Decomposition System According to Second Embodiment)

A thermal decomposition system according to a second embodiment will be described. Differences from the thermal decomposition system according to the first embodiment will mainly be described and redundant description will not be repeated.

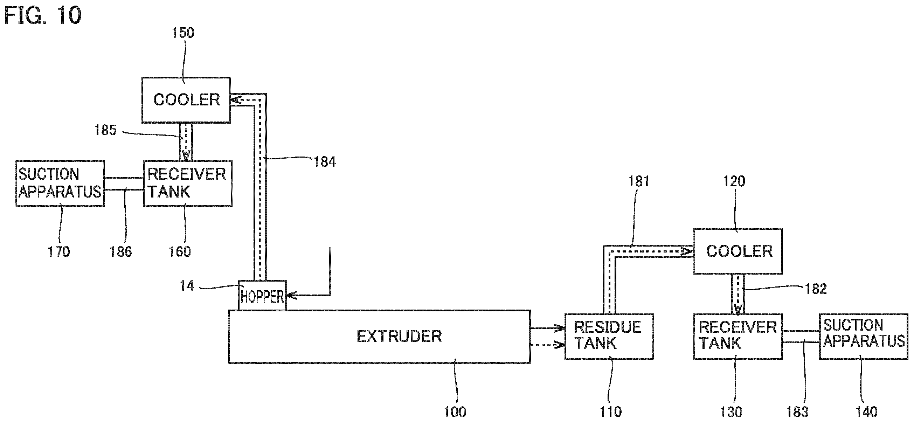

Fig. 10 is a schematic diagram of the thermal decomposition system according to the second embodiment. As shown in Fig. 10, the thermal decomposition system according to the second embodiment includes extruder 100, residue tank 110, cooler 120, receiver tank 130, and suction apparatus 140.

The thermal decomposition system according to the second embodiment further includes cooler 150, receiver tank 160, and a suction apparatus 170. The thermal decomposition system according to the second embodiment further includes conduit 181, conduit 182, conduit 183, conduit 184, conduit 185, and a conduit 186. Suction apparatus 170 is connected to receiver tank 160 through conduit 186. For example, a vacuum pump is employed as suction apparatus 170. Suction apparatus 170, however, is not limited thereto. An arrow shown by a solid line in Fig. 10 shows a flow of a polymer and an arrow shown by a dotted line in Fig. 10 shows a flow of decomposition gas or a liquid monomer.

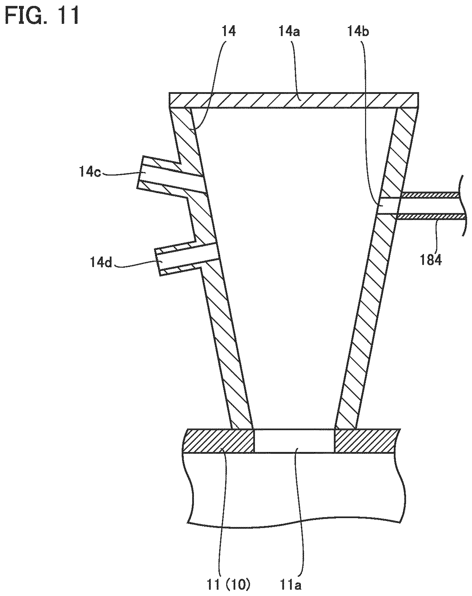

Fig. 11 is a cross-sectional view of hopper 14 included in extruder 100 of the thermal decomposition system according to the second embodiment. As shown in Fig. 11, in the thermal decomposition system according to the second embodiment, introduction hole 14d is not provided in chute 14c. Since the inside of hopper 14 is purged with inert gas, introduction hole 14d may be provided in the sidewall of hopper 14 in the thermal decomposition system according to the second embodiment.

In the thermal decomposition system according to the second embodiment, as suction apparatus 170 is driven, a pressure in the inside of cooler 150 and the inside of receiver tank 160 becomes negative relative to the pressure in the inside of hopper 14. Consequently, decomposition gas is sent through emission hole 14b and conduit 184 to cooler 120. Therefore, emission of backflow decomposition gas to the outside of the system is suppressed also in the thermal decomposition system according to the second embodiment.

### (Thermal Decomposition System According to Third Embodiment)

A thermal decomposition system according to a third embodiment will be described. Differences from the thermal decomposition system according to the first embodiment will mainly be described and redundant description will not be repeated.

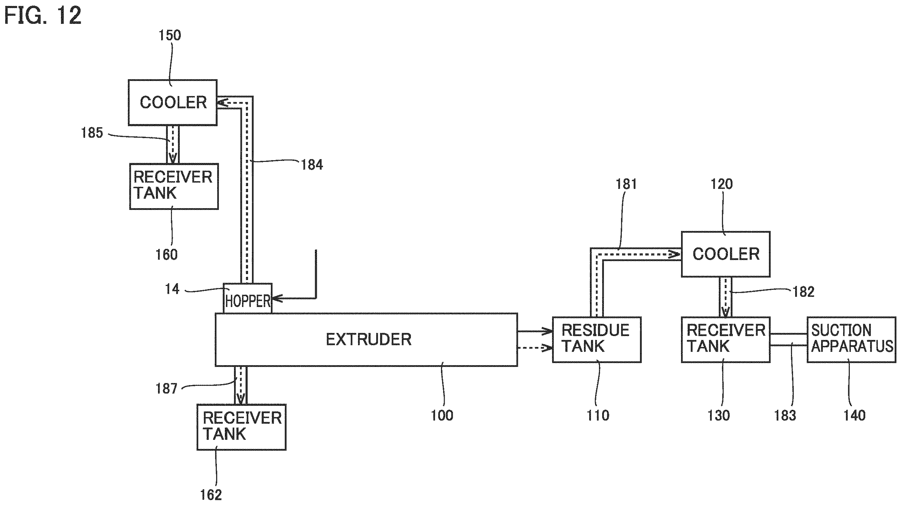

Fig. 12 is a schematic diagram of the thermal decomposition system according to the third embodiment. As shown in Fig. 12, the thermal decomposition system according to the third embodiment includes extruder 100, residue tank 110, cooler 120, receiver tank 130, and suction apparatus 140.

The thermal decomposition system according to the third embodiment further includes cooler 150, receiver tank 160, and a receiver tank 162. The thermal decomposition system according to the third embodiment further includes conduit 181, conduit 182, conduit 183, conduit 184, conduit 185, and a conduit 187. Hopper 14 of extruder 100 and receiver tank 162 are connected to each other through conduit 187. An arrow shown by a solid line in Fig. 12 shows a flow of a polymer and an arrow shown by a dotted line in Fig. 12 shows a flow of decomposition gas or a liquid monomer.

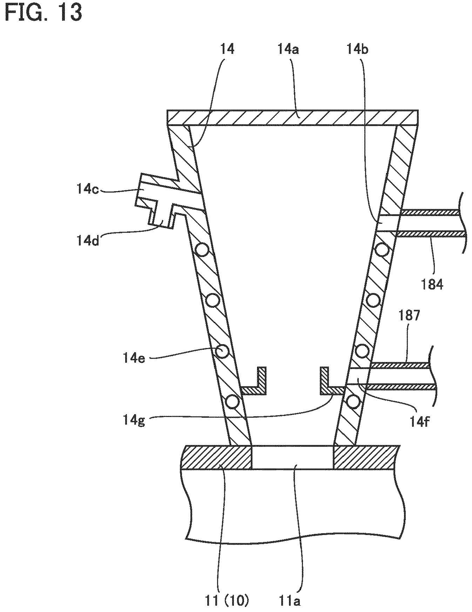

Fig. 13 is a cross-sectional view of hopper 14 included in extruder 100 of the thermal decomposition system according to the third embodiment. As shown in Fig. 13, in the thermal decomposition system according to the third embodiment, a flow channel 14e is provided in the sidewall of hopper 14. Coolant flows through flow channel 14e. The sidewall of hopper 14 is thus cooled. Backflow decomposition gas in hopper 14 is condensed in the sidewall of hopper 14 to become a liquid monomer.

In the thermal decomposition system according to the third embodiment, an emission hole 14f is provided in the sidewall of hopper 14. Emission hole 14f passes through the sidewall of hopper 14. In other words, emission hole 14f is connected to the internal space in hopper 14. Conduit 187 is connected to emission hole 14f. The liquid monomer condensed in the sidewall of hopper 14 passes through emission hole 14f and conduit 187 and is stored in receiver tank 162. Therefore, emission of backflow decomposition gas to the outside of the system is suppressed also in the thermal decomposition system according to the third embodiment. In order to facilitate emission of the condensed liquid monomer through emission hole 14f, a receiver 14g that receives a liquid polymer condensed in the sidewall of hopper 14 is provided in the sidewall of hopper 14.

### (Thermal Decomposition System According to Fourth Embodiment)

A thermal decomposition system according to a fourth embodiment will be described. Differences from the thermal decomposition system according to the first embodiment will mainly be described and redundant description will not be repeated.

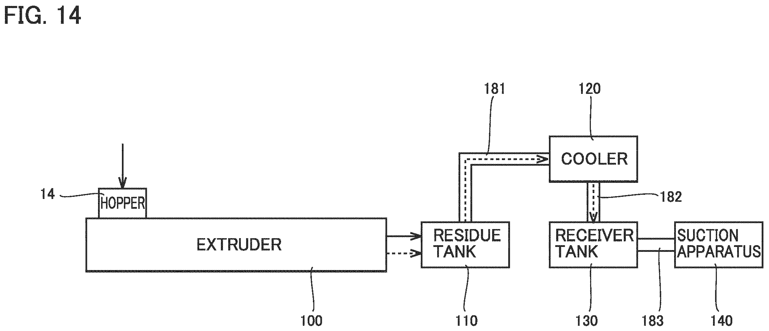

Fig. 14 is a schematic diagram of the thermal decomposition system according to the fourth embodiment. As shown in Fig. 14, the thermal decomposition system according to the fourth embodiment includes extruder 100, residue tank 110, cooler 120, receiver tank 130, and suction apparatus 140. The thermal decomposition system according to the fourth embodiment further includes conduit 181, conduit 182, and conduit 183.

The thermal decomposition system according to the fourth embodiment, however, does not include cooler 150 and receiver tank 160. In addition, the thermal decomposition system according to the fourth embodiment does not include conduit 184 and conduit 185. An arrow shown by a solid line in Fig. 14 shows a flow of a polymer and an arrow shown by a dotted line in Fig. 14 shows a flow of decomposition gas or a liquid monomer. The thermal decomposition system according to the fourth embodiment may include cooler 150, receiver tank 160, conduit 184, and conduit 185.

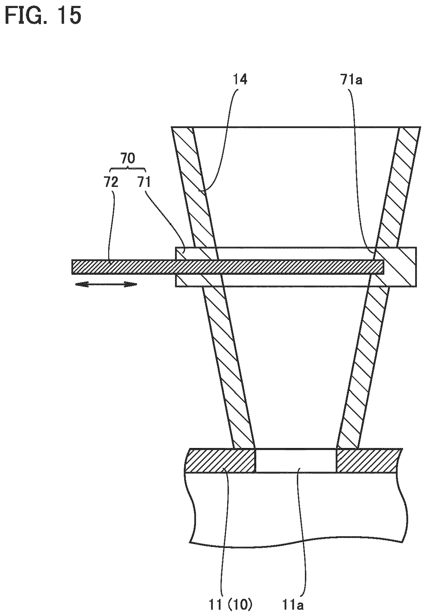

Fig. 15 is a cross-sectional view of hopper 14 included in extruder 100 of the thermal decomposition system according to the fourth embodiment. As shown in Fig. 15, in the thermal decomposition system according to the fourth embodiment, hopper 14 does not have the upper end closed by lid member 14a. In the thermal decomposition system according to the fourth embodiment, the upper end of hopper 14 may partially be closed. In the thermal decomposition system according to the fourth embodiment, emission hole 14b, chute 14c, and introduction hole 14d are not provided in the sidewall of hopper 14. In the thermal decomposition system according to the fourth embodiment, emission hole 14c, chute 14c, and introduction hole 14d may be provided in the sidewall of hopper 14.

In the thermal decomposition system according to the fourth embodiment, extruder 100 includes an opening and closing apparatus 70. For example, a gate valve serves as opening and closing apparatus 70. Opening and closing apparatus 70 includes a main body portion 71 and a partition plate 72. Main body portion 71 is provided with a through hole 71a.

Opening and closing apparatus 70 can switch between a state in which through hole 71a is closed by partition plate 72 and a state in which through hole 71a is not closed by partition plate 72, by slide of partition plate 72.

In the state in which through hole 71a is not closed by partition plate 72, the internal space in hopper 14 is connected to a space on the outside of hopper 14 through through hole 71a. In this state, a polymer can be injected into hopper 14 from a feeder (not shown) through through hole 71a. While through hole 71a is closed by partition plate 72, the internal space in hopper 14 is cut off from the space on the outside of hopper 14.

While extruder 100 is operating, through hole 71a is not closed by partition plate 72. On the other hand, when extruder 100 is brought to an emergency stop or normally brought to a standstill (screw 30 is brought to a standstill), the through hole is closed by partition plate 72.

While extruder 100 is operating, plasticization portion 12 is filled with a polymer and backflow decomposition gas is less likely to return to carrier portion 11. Decomposition of the polymer, however, proceeds even when extruder 100 is in a standstill. Therefore, the polymer filled in plasticization portion 12 no longer spatially isolates carrier portion 11 and thermal decomposition portion 13 from each other and backflow decomposition gas tends to return to carrier portion 11. Backflow decomposition gas that returns to carrier portion 11 may be emitted to the outside of the system through hopper 14.

In the thermal decomposition system according to the fourth embodiment, opening and closing apparatus 70 cuts off the internal space in hopper 14 from the space on the outside of hopper 14 while extruder 100 is in a standstill. Therefore, emission of backflow decomposition gas to the outside of the system is suppressed. In the thermal decomposition system according to the fourth embodiment, since the internal space in hopper 14 is connected to the space on the outside of hopper 14 while extruder 100 is operating, injection of a polymer into carrier portion 11 through hopper 14 is not interfered.

### (Thermal Decomposition System According to Fifth Embodiment)

A thermal decomposition system according to a fifth embodiment will be described. Differences from the thermal decomposition system according to the first embodiment will mainly be described and redundant description will not be repeated.

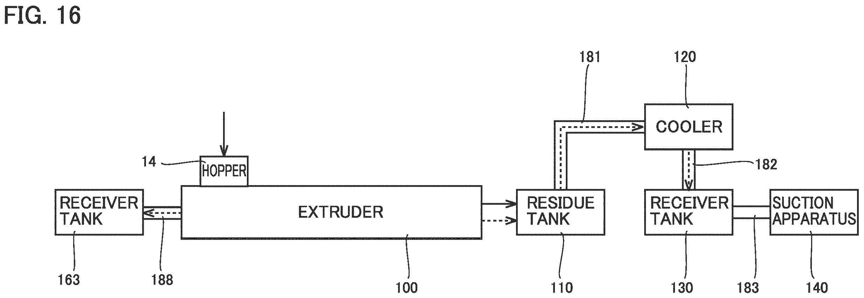

Fig. 16 is a schematic diagram of the thermal decomposition system according to the fifth embodiment. As shown in Fig. 16, the thermal decomposition system according to the fifth embodiment includes extruder 100, residue tank 110, cooler 120, receiver tank 130, and suction apparatus 140. The thermal decomposition system according to the fifth embodiment further includes conduit 181, conduit 182, and conduit 183.

The thermal decomposition system according to the fifth embodiment, however, does not include cooler 150 and receiver tank 160. In addition, the thermal decomposition system according to the fifth embodiment does not include conduit 184 and conduit 185. The thermal decomposition system according to the fifth embodiment includes a receiver tank 163 and a conduit 188. Extruder 100 and receiver tank 163 are connected to each other through conduit 188. An arrow shown by a solid line in Fig. 16 shows a flow of a polymer and an arrow shown by a dotted line in Fig. 16 shows a flow of decomposition gas or a liquid monomer. The thermal decomposition system according to the fifth embodiment may include cooler 150, receiver tank 160, conduit 184, and conduit 185.

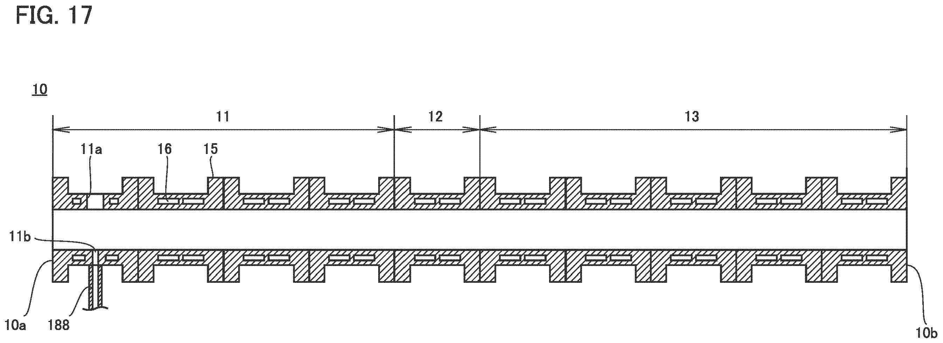

Fig. 17 is a cross-sectional view of cylinder 10 included in extruder 100 of the thermal decomposition system according to the fifth embodiment. As shown in Fig. 17, in the thermal decomposition system according to the fifth embodiment, cylinder 10 is composed of a plurality of divided cylinders 15 aligned along the direction from upstream end 10a toward downstream end 10b. Each of divided cylinders 15 is provided with a flow channel 16. Coolant flows through flow channel 16. Preferably, coolant can independently flow through flow channel 16 in each of divided cylinders 15. Though flow channel 16 is preferably provided in divided cylinder 15 that makes up thermal decomposition portion 13, flow channel 16 does not have to be provided in divided cylinder 15 that makes up thermal decomposition portion 13.

Coolant does not flow through flow channel 16 in divided cylinder 15 that makes up carrier portion 11 while extruder 100 is operating (that is, screw 30 is operating), whereas coolant flows therethrough while extruder 100 is in a standstill (that is, while screw 30 is in a standstill). Coolant, however, may constantly flow through flow channel 16 provided in divided cylinder 15 provided with hopper hole 11a.

Coolant does not flow through flow channel 16 in divided cylinder 15 that makes up plasticization portion 12 while extruder 100 is operating, whereas coolant flows therethrough while extruder 100 is in a standstill. Coolant does not flow through flow channel 16 in divided cylinder 15 that makes up thermal decomposition portion 13 while extruder 100 is operating, whereas coolant flows therethrough while extruder 100 is in a standstill. Coolant does not have to flow through flow channel 16 in divided cylinder 15 that makes up thermal decomposition portion 13 while extruder 100 is in a standstill.

In the thermal decomposition system according to the fifth embodiment, divided cylinder 15 provided with hopper hole 11a is provided with a slit 11b. Slit 11b passes through divided cylinder 15 and connects an internal space in divided cylinder 15 and a space on the outside of divided cylinder 15 to each other. Slit 11b is connected to conduit 188. Slit 11b is provided in a lower portion of divided cylinder 15 provided with hopper hole 11a. Divided cylinder 15 provided with hopper hole 11a may be provided with a mesh instead of slit 11b. Divided cylinder 15 that makes up carrier portion 11 other than divided cylinder 15 provided with hopper hole 11a may be provided with slit 11b (mesh). Slit 11b (mesh) may be provided in a portion other than the lower portion of divided cylinder 15.

While screw 30 is in a standstill, heater 20 is not activated (heating of the polymer is stopped).

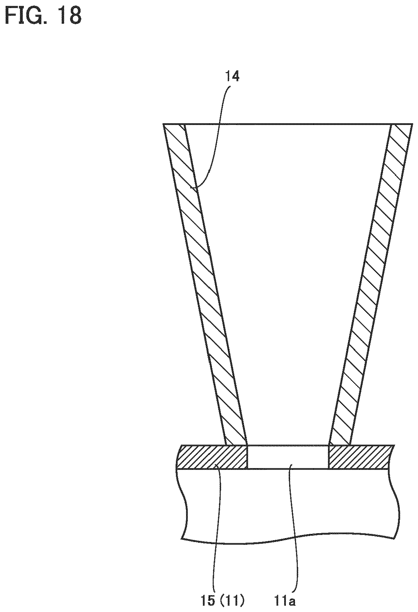

Fig. 18 is a cross-sectional view of hopper 14 included in extruder 100 of the thermal decomposition system according to the fifth embodiment. As shown in Fig. 18, in the thermal decomposition system according to the fifth embodiment, hopper 14 does not have the upper end closed by lid member 14a. In other words, in the thermal decomposition system according to the fifth embodiment, the polymer is injected into hopper 14 from an upper end side of hopper 14. In the thermal decomposition system according to the fifth embodiment, emission hole 14b, chute 14c, and introduction hole 14d are not provided in the sidewall of hopper 14. In the thermal decomposition system according to the fifth embodiment, however, emission hole 14b, chute 14c, and introduction hole 14d may be provided in the sidewall of hopper 14, and the upper end of hopper 14 may be closed by lid member 14a.

While extruder 100 is operating, plasticization portion 12 is filled with the polymer and backflow decomposition gas is less likely to return to carrier portion 11. Decomposition of the polymer, however, proceeds even when extruder 100 is brought to a standstill. Therefore, the polymer filled in plasticization portion 12 no longer spatially isolates carrier portion 11 and thermal decomposition portion 13 from each other and backflow decomposition gas tends to return to carrier portion 11. Backflow decomposition gas that returns to carrier portion 11 may be emitted to the outside of the system through hopper 14.

In the thermal decomposition system according to the fifth embodiment, plasticization portion 12 is cooled while extruder 100 is in a standstill so that the polymer filled in plasticization portion 12 is solidified. Therefore, spatial isolation between carrier portion 11 and thermal decomposition portion 13 by the polymer filled in plasticization portion 12 can be maintained also while extruder 100 is in a standstill, and emission of backflow decomposition gas to the outside of the system is suppressed.

Even while extruder 100 is in a standstill, thermal decomposition of the polymer in carrier portion 11 and plasticization portion 12 may proceed and backflow decomposition gas may be produced. In the thermal decomposition system according to the fifth embodiment, carrier portion 11 and plasticization portion 12 are cooled while extruder 100 is in a standstill. Therefore, backflow decomposition gas resulting from thermal decomposition of the polymer in carrier portion 11 and plasticization portion 12 is condensed in carrier portion 11 and plasticization portion 12 to become a liquid polymer. This liquid polymer passes through slit 11b and conduit 188 and is stored in receiver tank 163. Therefore, in the thermal decomposition system according to the fifth embodiment, emission of backflow decomposition gas produced in carrier portion 11 and plasticization portion 12 to the outside of the system is suppressed.

Though embodiments of the present disclosure have been described as above, the embodiments described above can also variously be modified. The scope of the present invention is not limited to the embodiments described above. The scope of the present invention is defined by the terms of the claims and is intended to include any modifications within the scope and meaning equivalent to the terms of the claims.

### REFERENCE SIGNS LIST

100, 200 extruder; 10 cylinder; 10a upstream end; 10b downstream end; 11 carrier portion; 11a hopper hole; 11b slit; 12 plasticization portion; 13 thermal decomposition portion; 14 hopper; 14a lid member; 14b emission hole; 14c chute; 14d introduction hole; 14e flow channel; 14f emission hole; 14g receiver; 15 divided cylinder; 16 flow channel; 20 heater; 30 screw; 31 shaft; 32 shaft; 33a kneading disc; 33b full flight screw; 34a kneading disc; 34b full flight screw; 40 motor; 41 motor main body; 42 shaft; 50 gearbox; 60 shaft sealing mechanism; 70 opening and closing apparatus; 71 main body portion; 71a through hole; 72 partition plate; 110 residue tank; 111 heater; 112 outlet; 120 cooler; 130 receiver tank; 131 outlet; 140 suction apparatus; 150 cooler; 160 receiver tank; 161 outlet; 162, 163 receiver tank; 170 suction apparatus; 181, 182, 183, 184, 185, 186, 187, 188 conduit; S1 polymer injection step; S2 polymer plasticization step; S3 polymer thermal decomposition step; S4 monomer collection step; S5 decomposition gas emission step; S6 monomer collection step

## Claims

1. A thermal decomposition extruder that thermally decomposes a polymer, the thermal decomposition extruder comprising:
a screw that carries, plasticizes, and thermally decomposes the polymer;
a cylinder where the screw is contained; and
a hopper for injection of the polymer into the cylinder, wherein
the hopper has an upper end closed, and
the hopper includes a sidewall, the sidewall being provided with an emission hole for emission of decomposition gas to outside of the hopper, the decomposition gas being produced during thermal decomposition of the polymer.

2. The thermal decomposition extruder according to claim 1, wherein the sidewall of the hopper is provided with an introduction hole for introduction of inert gas into the hopper along an inner wall surface of the sidewall of the hopper.

3. The thermal decomposition extruder according to claim 1 or 2, wherein
in the sidewall of the cylinder, a flow channel for flow of coolant is provided.

4. The thermal decomposition extruder according to any one of claims 1 to 3, further comprising a shaft sealing mechanism that cuts off a flow of the decomposition gas from an upstream end of the cylinder.

5. A thermal decomposition extruder that thermally decomposes a polymer, the thermal decomposition extruder comprising:
a screw that carries, plasticizes, and thermally decomposes the polymer;
a cylinder where the screw is contained;
a hopper for injection of the polymer into the cylinder; and
an opening and closing apparatus switched between an open state in which an internal space in the hopper is connected to a space on outside of the hopper and a closed state in which the internal space in the hopper is disconnected from the space on the outside of the hopper.

6. The thermal decomposition extruder according to claim 5, further comprising a shaft sealing mechanism that cuts off a flow of decomposition gas from an upstream end of the cylinder, the decomposition gas being produced during thermal decomposition of the polymer.

7. A thermal decomposition extruder that thermally decomposes a polymer, the thermal decomposition extruder comprising:
a screw that carries, plasticizes, and thermally decomposes the polymer;
a cylinder where the screw is contained; and
a shaft sealing mechanism that cuts off a flow of decomposition gas from an upstream end of the cylinder, the decomposition gas being produced during thermal decomposition of the polymer.

8. A thermal decomposition extruder that thermally decomposes a polymer, the thermal decomposition extruder comprising:
a screw that carries, plasticizes, and thermally decomposes the polymer; and
a cylinder where the screw is contained, wherein
the cylinder includes
a carrier portion that carries the polymer,
a plasticization portion that plasticizes the polymer, and
a thermal decomposition portion that thermally decomposes the polymer to produce decomposition gas, and
while the screw is at a standstill, the carrier portion and the plasticization portion are cooled.

9. The thermal decomposition extruder according to claim 8, wherein
while the screw is at a standstill, the carrier portion, the plasticization portion, and the thermal decomposition portion are cooled.

10. The thermal decomposition extruder according to claim 8 or 9, wherein
the carrier portion is provided with a slit or a mesh for emission of liquefied decomposition gas to outside of cylinder.

11. A thermal decomposition system comprising:
a thermal decomposition extruder that thermally decomposes a polymer; and
a suction apparatus, wherein
the thermal decomposition extruder includes
a screw that carries, plasticizes, and thermally decomposes the polymer,
a cylinder where the screw is contained, and
a hopper for injection of the polymer into the cylinder,
the hopper has an upper end closed,
the hopper includes a sidewall, the sidewall being provided with an emission hole for emission of decomposition gas to outside of the hopper, the decomposition gas being produced during thermal decomposition of the polymer, and
the suction apparatus suctions the decomposition gas through the emission hole.

12. A method of manufacturing decomposition gas, the method comprising the steps of:
(a) injecting a polymer through a hopper into a cylinder of a thermal decomposition extruder;
(b) plasticizing the polymer with a screw in the cylinder;
(c) thermally decomposing the polymer after the step (b);
(d) emitting decomposition gas produced during the step (c) to outside of the hopper through an emission hole provided in a sidewall of the hopper; and
(e) collecting the emitted decomposition gas after the step (c).

13. The method of manufacturing decomposition gas according to claim 12, wherein
the step (c) is performed by utilizing a flow of inert gas introduced into the hopper.

14. The method of manufacturing decomposition gas according to claim 12, wherein
the step (c) is performed by suction through the emission hole.

15. A method of emitting decomposition gas, the method comprising the steps of:
(a) injecting a polymer through a hopper into a cylinder of a thermal decomposition extruder;
(b) plasticizing the polymer with a screw in the cylinder;
(c) thermally decomposing the polymer after the step (b); and
(d) emitting decomposition gas produced during the step (c) to outside of the hopper through an emission hole provided in a sidewall of the hopper.
